# EUROPÄISCHE PATENTSCHRIFT

(11) **EP 3 218 841 B1**
(45) Veröffentlichungstag und Bekanntmachung des Hinweises auf die Patenterteilung: **17.06.2020**
(21) Anmeldenummer: 15763558.2
(22) Anmeldetag: 10.09.2015
(51) Int. Cl.: G06K 7/00, G06K 19/077

(54) **METALLURIGISCHER GEFÄSS MIT EINER IDENTIFIKATIONSMARKE , LESESTATION UND VERFAHREN ZUR BESTIMMUNG DES VERSCHLEISSZUSTANDES DER IDENTIFIKATIONSMARKE**
IDENTIFICATION TAG FOR ATTACHMENT TO A METALLURGICAL VESSEL, READING STATION AND METHOD FOR DETERMINING A WEAR STATUS FOR THE IDENTIFICATION TAG
MARQUES D'IDENTIFICATION DESTINÉES À ÊTRE APPLIQUÉES SUR UN RÉCIPIENT MÉTALLURGIQUE, STATION DE LECTURE ET PROCÉDÉ DE DÉTERMINATION D'UN ÉTAT D'USURE DES MARQUES D'IDENTIFICATION

(30) Priorität: 11.11.2014 EP 14192673
(43) Veröffentlichungstag der Anmeldung: 20.09.2017
(73) Patentinhaber: Primetals Technologies Austria GmbH, 4031 Linz (AT)
(72) Erfinder: KUEHAS, Thomas, 4225 Luftenberg (AT); ROHRHOFER, Andreas, 4020 Linz (AT); HARTL, Franz, 4720 Kalham (AT)
(74) Vertreter: Metals@Linz
(86) Internationale Anmeldenummer: PCT/EP2015/070725
(87) Internationale Veröffentlichungsnummer: WO 2016/074824

(56) Entgegenhaltungen:
- EP-A2- 2 119 989
- DE-A1-102008 011 288
- US-A1- 2011 121 079
- US-A1- 2011 140 970
- US-A1- 2011 251 712
- US-A1- 2013 043 974

## Beschreibung

Die vorliegende Erfindung geht aus von einem metallurgischen Gefäß, wobei das metallurgische Gefäß eine äußere Oberfläche und eine Identifikationsmarke aufweist, wobei die Identifikationsmarke an der äußeren Oberfläche angeordnet ist, wobei die Identifikationsmarke eine Trägermatrix aufweist und in die Trägermatrix ein passiver Transponder eingebettet ist, wobei die Trägermatrix aus einem elektrisch und thermisch isolierenden Material gebildet ist.

Die vorliegende Erfindung geht weiterhin aus von einem Betriebsverfahren für eine innerhalb einer metallurgischen Anlage an einer Nachverfolgungsposition angeordnete Lesestation zur Wegverfolgung eines metallurgischen Gefäßes, an dem mindestens ein passiver Transponder angeordnet ist,
- wobei eine Antenne der Lesestation eine Aktivierung des passiven Transponders initiiert, sofern ein derartiges metallurgisches Gefäß sich in einem Erfassungsbereich der Lesestation befindet,
- wobei daraufhin eine Leseeinheit der Lesestation die aktivierten passiven Transponder ausliest und das Ergebnis an eine Auswerteeinheit der Lesestation übermittelt.

Die vorliegende Erfindung geht weiterhin aus von einer innerhalb einer metallurgischen Anlage an einer Nachverfolgungsposition angeordneten Lesestation,
- wobei die Lesestation eine Antenne zur Initiierung der Aktivierung von an einem metallurgischen Gefäß angeordneten passiven Transpondern aufweist,
- wobei die Lesestation eine Leseeinheit zum Auslesen der aktivierten passiven Transponder des metallurgischen Gefäßes und zum Übermitteln der ausgelesenen Daten an eine Auswerteeinheit der Lesestation aufweist,
- wobei die Lesestation die Auswerteeinheit aufweist.

In metallurgischen Industrieanlagen werden metallurgische Gefäße eingesetzt, um Roheisenschmelzen, Stahlschmelzen, flüssige Schlacke, Schrott und dergleichen zu transportieren. Zum Beispiel sind in einem Stahlwerk in verschiedenen Anlagenteilen mehrere Gefäße im Einsatz. Je nach Kapazität des Stahlwerks können dabei 30 und mehr Gefäße gleichzeitig im Einsatz sein. Diese durchlaufen verschiedene Routen zwischen den unterschiedlichen Anlagenteilen. Ein Anlagenbediener oder Kranfahrer hat dabei sicherzustellen, dass ein bestimmtes Gefäß an den richtigen Ort verbracht und in Folge bestimmungsgemäß eingesetzt oder gelagert wird.

Sowohl unter dem Gesichtspunkt der Qualität (möglichst geringe Abkühlung des Roheisen/Stahlbades im Gefäß) als auch aus Energiespargründen wird ein möglichst hoher Heißeinsatz von Gefäßen angestrebt. Die Gefäße in einem Stahlwerk werden z.B. beheizt, bevor Stahl aus dem Elektrolichtbogenofen eingefüllt wird. Zudem wird vermieden, bestimmte Stahlqualitäten nacheinander in demselben Gefäß zu transportieren, da die darin verbleibenden geringen Restmengen an Schmelze oder Metall der letzten Befüllung die Zusammensetzung der Metallschmelze der nachfolgenden Befüllung chemisch beeinflussen können. Dies ist z.B. bei bestimmten Edelstahlgüten der Fall.

Aus diesem Grund werden die eingesetzten metallurgischen Gefäße mit Identifikationsmarken, insbesondere enthaltend spezielle Transponder, ausgestattet. Mithilfe dieser Identifikationsmarken können die sich im Einsatz befindlichen metallurgischen Gefäße an den verschiedenen Nachverfolgungspositionen eindeutig erkannt und identifiziert werden.

Die Identifikationsmarken für die metallurgischen Gefäße werden entweder fest mit dem zu identifizierenden Behälter verschweißt oder durch eine lösbare Schraubverbindung mit diesem verbunden. Durch den Transport der Gefäße werden die Identifikationsmarken oftmals beschädigt oder von dem zu identifizierenden metallurgischen Gefäß abgerissen. Die zur Identifizierung notwendigen Identifikationsmarken müssen aus diesem Grund immer wieder erneuert oder ausgetauscht werden.

Aufgrund der herrschenden rauen Bedingungen in metallurgischen Industrieanlagen kommt es nicht nur zu mechanischer Beanspruchung der Identifikationsmarken, sondern auch aufgrund der Anordnung der Identifikationsmarken an den heißen Gefäßen zu einer thermischen Beanspruchung, die zu Ausfällen der eingesetzten passiven Transponder führt. Ein derartiger Ausfall eines Transponders führt dazu, dass ein Gefäß nicht mehr automatisch erkannt werden kann.

Aus der DE 10 2008 011 288 A1 ist ein Bremsbelag einer Scheibenbremse bekannt, in den mehrere Transponder eingebracht sein können. Je nach Verschleiß des Bremsbelags versagen die Transponder nacheinander. Je nachdem, welche und gegebenenfalls wieviele der Transponder auf ein Lesesignal eines Lesegeräts reagieren, können daher Rückschlüsse auf den Verschleiß des Bremsbelags gezogen werden.

Aus der US2011251712 A1 ist eine Vorrichtung zur aktiven Verfolgung spezifischer Daten zu Komponenten eines Hüttenwerks bekannt. Aus der US2011121079 A1 ist bekannt, zwei RFID Tags in Schichten eines Artikels zu integrieren.

Aus der US 2011/0 140 970 A1 ist bekannt, dass ein menschliches Objekt mit mehreren Transpondern versehen werden kann. Die mehreren Transponder dienen dazu, eine sichere Erkennung des Objekts auch dann zu gewährleisten, wenn einzelne der Transponder abgeschattet sind, d.h. dass sich beispielsweise das menschliche Objekt selbst oder ein anderes menschliches Objekt oder ein anderer Gegenstand zwischen einem der Transponder und einer den Transponder erkennenden Station befindet.

EP-A-2 119 989 offenbart die Merkmale des Oberbegriffs von Anspruch 1.

Die Aufgabe der vorliegenden Erfindung besteht darin, Möglichkeiten zu schaffen, mittels derer ein möglicher Ausfall der Identifikationsmarken insbesondere aufgrund thermischen Verschleißes rechtzeitig erkannt werden kann. Die Erkennung soll insbesondere möglich sein, bevor eine auf der Erkennung der Transponder basierende automatische Identifizierung des jeweiligen metallurgischen Gefäßes nicht mehr möglich ist.

Die Aufgabe wird zunächst durch ein metallurgisches Gefäß mit den Merkmalen des Anspruchs 1 gelöst.

Erfindungsgemäß wird ein metallurgisches Gefäß der eingangs genannten Art dadurch ausgestaltet, dass in die Trägermatrix mindestens ein weiterer passiver Transponder eingebettet ist, in die Trägermatrix also insgesamt mindestens zwei passive Transponder eingebettet sind. Die passiven Transponder können auf einer Ebene und/oder in unterschiedlichen Ebenen der Identifikationsmarke angeordnet sein. Die Trägermatrix kann beispielsweise aus Glasfaserplatten, Holz usw. bestehen, um den Wärmeübergang vom metallurgischen Gefäß zu den Transpondern möglichst zu begrenzen.

Die Anzahl an passiven Transpondern beträgt, wie erwähnt, minimal zwei. Sie kann aber auch größer sein. Insbesondere ist ein gleichzeitiger Ausfall aller in einer Identifikationsmarke enthaltenen Transponder umso unwahrscheinlicher, je mehr Transponder vorhanden sind. Fällt ein Transponder aus einer Mehrzahl an Transpondern aufgrund übermäßiger mechanischer und/oder thermischer Beanspruchung aus, ist mindestens ein redundanter weiterer Transponder vorhanden, der mit hoher Wahrscheinlichkeit noch funktionsfähig ist und aus dem die Daten zur Erkennung und eindeutigen automatischen Identifizierung des metallurgischen Gefäßes, an dem die Identifikationsmarke angebracht ist, ausgelesen werden können. Das Risiko, dass metallurgische Gefäße aufgrund eines defekten Transponders nicht erkannt und identifiziert werden können, reduziert sich somit drastisch.

Allerdings kann der Ausfall eines oder mehrerer der in der Identifikationsmarke vorhandenen Transponder einen Hinweis darauf geben, dass ein merklicher Verschleiß eingetreten ist und ein Austausch der Identifikationsmarke vorgenommen werden sollte, bevor schließlich alle Transponder ausfallen.

Die erfindungsgemäße Identifikationsmarke ermöglicht eine Erkennung ihres aktuellen Verschleißzustandes auf Basis einer Erkennung der Anzahl der aktivierbaren und gegebenenfalls Anzahl der nicht mehr aktivierbaren passiven Transponder.

Ein passiver Transponder (= Funk-Kommunikationsgerät) bezieht die zur Abarbeitung interner Prozesse benötigte Energie induktiv aus von außen bereitgestellten elektromagnetischen Feldern, die beispielsweise durch eine Antenne abgestrahlt werden. Somit weisen passive Transponder zwar keine eigene Energieversorgung auf, können aber auf kürzeren Distanzen arbeiten. Dabei haben sich alle Arten passiver Transponder, insbesondere aber in Form von RFID-Transpondern wie auch SAW-Transpondern (SAW = Surface Acoustic Waves), als geeignet erwiesen.

Es hat sich bewährt, wenn die mindestens zwei passiven Transponder beabstandet nebeneinander auf einer Ebene der Identifikationsmarke angeordnet sind. Diese Anordnung ist besonders bei einer einseitigen mechanischen Belastung der Identifikationsmarke aussagefähig, da in einem solchen Fall meist nur einer der Transponder ausfällt.

Bevorzugt sind mindestens zwei Ebenen vorhanden, wobei pro Ebene mindestens ein passiver Transponder angeordnet ist. Diese Anordnung eignet sich insbesondere bei frontaler mechanischer Beanspruchung oder hoher thermischer Belastung von Seiten des Gefäßes.

Vorzugsweise sind weiterhin mindestens zwei Ebenen vorhanden, wobei pro Ebene mindestens zwei passive Transponder beabstandet nebeneinander angeordnet sind. Diese Anordnung deckt sowohl den Fall einer einseitigen thermischen Belastung wie auch die Fälle einseitiger oder frontaler mechanischer Belastung und einseitiger thermischer Belastung zuverlässig ab.

In einer bevorzugten Ausgestaltung weist die Trägermatrix mehrere Lagen auf, wobei die Dicke der Lagen mit zunehmendem Abstand von der äußeren Oberfläche des metallurgischen Gefäßes monoton abnimmt und zwischen je zwei Lagen jeweils mindestens einer der passiven Transponder angeordnet ist. Dadurch wird im Ergebnis der thermische Verschleiß der Transponder minimiert, obwohl diese orthogonal zur Oberfläche des metallurgischen Gefäßes gesehen sequenziell hintereinander angeordnet sind.

Die Aufgabe wird weiterhin durch ein Betriebsverfahren mit den Merkmalen des Anspruchs 2 gelöst. Vorteilhafte Ausgestaltungen des Betriebsverfahrens sind Gegenstand der abhängigen Ansprüche 3 bis 7.

Erfindungsgemäß wird ein Betriebsverfahren der eingangs genannten Art dadurch ausgestaltet,
- dass die Auswerteeinheit ermittelt, welche und/oder wieviele der passiven Transponder tatsächlich aktiviert wurden, und
- dass die Auswerteeinheit in Abhängigkeit von dieser Ermittlung der Gesamtheit an passiven Transpondern des metallurgischen Gefäßes einen Verschleißzustand zuordnet.

Können alle vorhandenen passiven Transponder aktiviert werden, so liegt kein oder nur ein unbedeutender Verschleiß vor. Die Gesamtheit an Transpondern wird als ordnungsgemäß eingestuft und weiter verwendet. Können nicht alle vorhandenen passiven Transponder aktiviert werden, wird von einer Beschädigung ausgegangen. Mindestens einer der Transponder wird für einen baldigen Austausch eingeplant. Je mehr der vorhandenen Transponder nicht aktiviert werden können, desto höher wird der Beschädigungsgrad bzw. der Verschleiß eingestuft.

Die Lesestation muss selbstverständlich wissen, ob sich das metallurgische Gefäß in dem Erfassungsbereich der Lesestation befindet. Es ist möglich, dass die Auswerteeinheit von einem übergeordneten Managementsystem oder von einem Bediener eine entsprechende Information entgegennimmt. Alternativ ist es möglich, dass die Lesestation die Anwesenheit des metallurgischen Gefäßes in dem Erfassungsbereich der Lesestation mittels einer Sensoreinrichtung erfasst.

In dem Fall, dass die Anzahl an tatsächlich aktivierten passiven Transpondern oberhalb einer oberen Schranke liegt, stuft die Auswerteeinheit die Gesamtheit an passiven Transpondern als ordnungsgemäß ein und lässt einen weiteren Betrieb des metallurgischen Gefäßes zu. Umgekehrt gibt die Auswerteeinheit in dem Fall, dass die Anzahl an tatsächlich aktivierten passiven Transpondern unterhalb einer unteren Schranke liegt, unmittelbar eine Anforderung für einen Austausch mindestens eines der passiven Transponder über eine Anzeigeeinheit an eine Bedienperson aus. Alternativ oder zusätzlich übermittelt sie in diesem Fall die Anforderung an ein übergeordnetes Managementsystem.

Es ist möglich, dass die untere Schranke mit der oberen Schranke übereinstimmt, also eine rein binäre Entscheidung getroffen wird. Vorzugsweise ist die obere Schranke jedoch größer als die untere Schranke. In diesem Fall ist es möglich, dass die Auswerteeinheit in dem Fall, dass die Anzahl an tatsächlich aktivierten passiven Transpondern zwischen der unteren Schranke und der oberen Schranke liegt, ein Warnsignal über die Anzeigeeinheit an die Bedienperson ausgibt und/oder das Warnsignal an das übergeordnete Managementsystem übermittelt. Das Warnsignal ist in diesem Fall ein von einer Anforderung für einen Austausch mindestens eines der passiven Transponder verschiedenes Signal. Es kann dadurch darauf hingewiesen werden, dass ein ordnungsgemäßer Betrieb zwar noch möglich ist, jedoch vorzugsweise nicht mehr allzu lange aufrechterhalten wird. Die Ausgabe bzw. Übermittlung erfolgt also beispielsweise in Form oder sinngemäß einer Ampelsignalisierung, indem für eine weiterhin funktionsfähige Identifikationsmarke ein "grünes Signal", für eine leicht beschädigte Identifikationsmarke ein "gelbes Signal" und für eine stark beschädigte Identifikationsmarke ein "rotes Signal" ausgegeben wird.

Vorzugsweise wird innerhalb der Auswerteeinheit zusammen mit der Ausgabe bzw. Übermittlung des Warnsignals ein Timer gestartet, der seinerseits nach Ablauf einer vorbestimmten Verzögerungszeit unmittelbar eine Anforderung für einen Austausch mindestens eines der passiven Transponder über die Anzeigeeinheit an die Bedienperson ausgibt und/oder an das übergeordnete Managementsystem übermittelt. Dadurch kann eine leicht beschädigte Identifikationsmarke für einen definierten Zeitraum - nämlich die Verzögerungszeit des Timers - weiter betrieben werden und nach Ablauf dieses Zeitraums der entsprechenden Identifikationsmarke automatisch ein "rotes Signal" oder ein "Austauschkenner" zugeordnet werden, um einen Austausch der Identifikationsmarke auszulösen.

Vorzugsweise nimmt weiterhin die Auswerteeinheit von dem Managementsystem einen Einsatz- und Fahrplan für das metallurgische Gefäß entgegen. In diesem Fall ist es möglich, dass die Auswerteeinheit in dem Fall, dass sie eine Anforderung für einen Austausch mindestens eines der passiven Transponder über die Anzeigeeinheit an die Bedienperson ausgibt, unter Verwendung des Einsatz- und Fahrplans einen bevorzugten Zeitpunkt oder Zeitraum für den Austausch mindestens eines der passiven Transponder ermittelt und zusammen mit der Anforderung über die Anzeigeeinheit an die Bedienperson ausgibt. Es ist also möglich, vorausschauend einen optimalen Zeitpunkt bzw. Zeitraum für den Austausch mindestens eines der Transponder zu ermitteln.

Die Aufgabe wird weiterhin durch eine Lesestation mit den Merkmalen des Anspruchs 8 gelöst. Eine vorteilhafte Ausgestaltung der Lesestation ist Gegenstand des abhängigen Anspruchs 9.

Erfindungsgemäß ist bei einer Lesestation der eingangs genannten Art die Auswerteeinheit derart ausgebildet, dass sie ermittelt, welche und/oder wieviele der passiven Transponder tatsächlich aktiviert wurden, und in Abhängigkeit von dieser Ermittlung der Gesamtheit an passiven Transpondern des metallurgischen Gefäßes einen Verschleißzustand zuordnet.

Die Lesestation ermöglicht eine schnelle und unkomplizierte automatische Erkennung der aktivierbaren und der eventuell nicht aktivierbaren passiven Transponder und erfasst damit den aktuellen Verschleißzustand einer Identifikationsmarke. Dies ermöglicht einen rechtzeitigen Austausch der Identifikationsmarke und damit einen durchgehend störungsfreien Betrieb des metallurgischen Gefäßes.

Vorzugsweise ist die Auswerteeinheit sogar derart ausgebildet, dass sie auch die vorteilhaften Ausgestaltungen des oben erwähnten Betriebsverfahrens ausführt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die in Verbindung mit den Zeichnungen näher erläutert werden. Hierbei zeigen in schematischer Darstellung:
- FIG 1: ein metallurgisches Gefäß mit einer Identifikationsmarke,
- FIG 2: eine Lesestation in Kommunikation mit der Identifikationsmarke gemäß FIG 1,
- FIG 3: eine erste Identifikationsmarke mit drei passiven Transpondern,
- FIG 4: die Seitenansicht der ersten Identifikationsmarke aus FIG 3 in einer Explosionsdarstellung,
- FIG 5: eine zweite Identifikationsmarke mit zwei passiven Transpondern,
- FIG 6: die Seitenansicht der zweiten Identifikationsmarke aus FIG 5 in einer Explosionsdarstellung,
- FIG 7: eine dritte Identifikationsmarke mit sechs passiven Transpondern und
- FIG 8: die Seitenansicht der dritten Identifikationsmarke aus FIG 7 in einer Explosionsdarstellung.

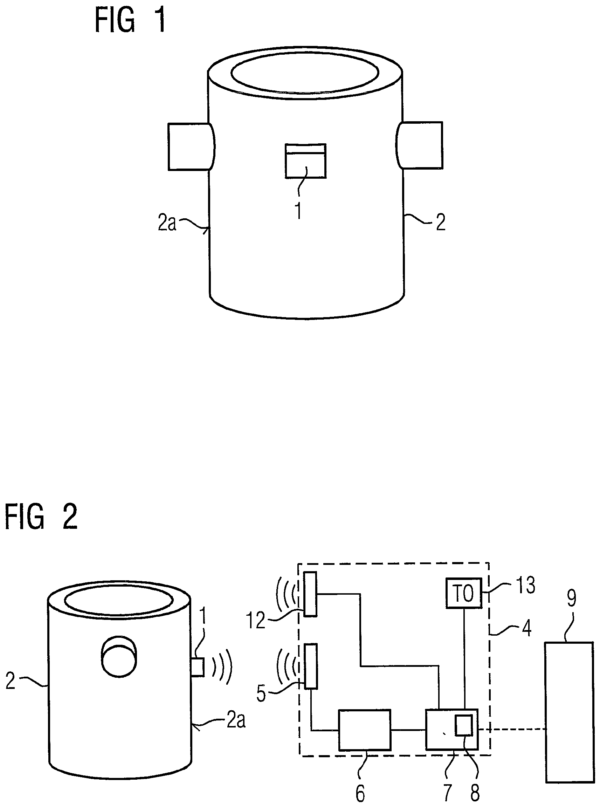

FIG 1 zeigt ein metallurgisches Gefäß 2 mit einer Identifikationsmarke 1, die an der äußeren Oberfläche 2a des metallurgischen Gefäßes 2 angeordnet ist. Die Ausgestaltung der Identifikationsmarke 1 wird später näher erläutert werden.

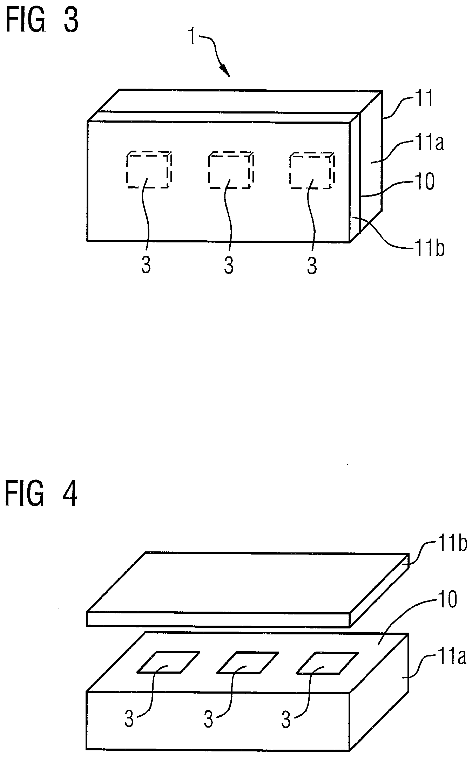

FIG 2 zeigt eine Lesestation 4 in drahtloser Kommunikation mit der Identifikationsmarke 1 gemäß FIG 1. Gleiche Bezugszeichen kennzeichnen gleiche Elemente. Die Lesestation 4 dient der Wegverfolgung des metallurgischen Gefäßes 2 von FIG 1. Zu diesem Zweck liest die Lesestation 4 insbesondere passive Transponder 3, 3a, 3b (siehe FIG 3 bis 8) der Identifikationsmarke 1 aus. Die Lesestation 4 umfasst eine Antenne 5, eine Leseeinheit 6 und eine Auswerteeinheit 7. Die Lesestation 4 ist innerhalb einer metallurgischen Anlage - beispielsweise einem Stahlwerk - an einer Nachverfolgungsposition angeordnet. Beispielsweise kann die Lesestation 4 am Lichtbogenofen, am Pfannenofen, bei einem Schlackendepot, an einer Vakuumbehandlungsanlage oder an einer Transporteinrichtung (beispielsweise einem Kran) angeordnet sein.

Wenn das metallurgische Gefäß 2 in einen Erfassungsbereich der Lesestation 4 gerät, wird dies der Lesestation 4 bekannt. Der Erfassungsbereich der Lesestation 4 ist derjenige Bereich, innerhalb dessen die Transponder 3, 3a, 3b der Identifikationsmarke 1 von einer Antenne 5 der Lesestation 4 erfasst und ausgelesen werden können. Er kann - je nach Art der Transponder 3, 3a, 3b - im Bereich weniger Zentimeter bis einiger Meter liegen.

Die Lesestation 4 ist in der Regel in einem Gehäuse angeordnet, angedeutet in FIG 2 durch die gestrichelte Umrandung. Es ist möglich, dass die Lesestation 4 mit einem thermischen Schutzschild (nicht dargestellt) versehen ist, mittels dessen die Lesestation 4 gegen die Wärmestrahlung des vorbei bewegten metallurgischen Gefäßes 2 abgeschirmt wird. Der Schutzschild kann beispielsweise als Teflonplatte ausgebildet sein. Falls erforderlich, kann die Lesestation 4 zum Schutz ihrer elektronischen Einheiten auch eine Klimatisierung aufweisen.

Die Antenne 5 kann alternativ innerhalb oder außerhalb des Gehäuses der Lesestation 4 angeordnet sein. Im letztgenannten Fall kann die Antenne 5 - unabhängig davon, ob die Lesestation 4 einen thermischen Schutzschild aufweist oder nicht - ihrerseits einen thermischen Schutzschild aufweisen. Die obigen Aussagen zur Ausgestaltung des Schutzschilds der Lesestation 4 sind analog anwendbar. Im Falle der Anordnung der Antenne 5 außerhalb des Gehäuses der Lesestation 4 kann die Elektronik der Lesestation 4 etwas geschützter abseits des Hauptgefahrenbereichs angeordnet werden. Dies ist insbesondere in thermisch hochbelasteten Bereichen von Vorteil. Weiterhin besteht die Antenne 5 in diesem Fall vorzugsweise aus Metall. Die Verbindung zwischen der Antenne 5 und den übrigen Komponenten der Lesestation 4 erfolgt vorzugsweise über ein - gegebenenfalls in einem Schutzkanal oder Schutzrohr angeordnetes - Kabel.

Zur Bekanntgabe des Sachverhalts, dass sich das metallurgische Gefäß 2 im Erfassungsbereich der Lesestation 4 befindet, kann die Auswerteeinheit 7 beispielsweise von einem Bediener (nicht dargestellt) eine entsprechende Information entgegennehmen. Alternativ kann die Information der Auswerteeinheit 7 von einem übergeordneten Managementsystem 9 zur Verfügung gestellt werden. Alternativ ist es möglich, dass die Lesestation 4 eine Sensoreinrichtung 12 aufweist, mittels derer die Anwesenheit des metallurgischen Gefäßes 2 in dem Erfassungsbereich der Lesestation 4 erfasst wird. Beispiele geeigneter Sensoreinrichtungen 12 sind Ultraschall-, Radar- oder Lasersensoren. Angesichts des Umstands, dass in dem metallurgischen Gefäß 2 sich oftmals flüssiges und damit heißes Metall oder auch heiße Schlacke befindet, kann unter Umständen auch eine thermische Erfassung möglich sein.

Sofern also ein metallurgisches Gefäß 2 sich in dem Erfassungsbereich der Lesestation 4 befindet, wird mittels der Antenne 5 der Lesestation 4 eine Aktivierung der passiven Transponder 3, 3a, 3b der Identifikationsmarke 1 des metallurgischen Gefäßes 2 initiiert. Die Antenne 5 emittiert also ein entsprechendes Anregungssignal. Aufgrund der Anregung senden die Transponder 3, 3a, 3b ein jeweiliges, entsprechend moduliertes Antwortsignal zurück, das wiederum von der Antenne 5 empfangen und an die Leseeinheit 6 der Lesestation 4 übermittelt wird. Im Ergebnis liest somit die Leseeinheit 6 der Lesestation 4 die aktivierten passiven Transponder 3, 3a, 3b aus. Das Ergebnis übermittelt die Leseeinheit 6 an die Auswerteeinheit 7.

Im Idealfall reagieren alle Transponder 3, 3a, 3b, die am metallurgischen Gefäß 2 angeordnet sind, auf das Anregungssignal der Antenne 5. Es ist jedoch möglich, dass einer oder mehrere der Transponder 3, 3a, 3b beschädigt sind und deshalb auf das Anregungssignal nicht reagieren. Die Auswerteeinheit 7 ermittelt daher, welche und/oder wieviele der passiven Transponder 3, 3a, 3b tatsächlich aktiviert wurden. In Abhängigkeit von der Ermittlung ordnet die Auswerteeinheit 7 der Gesamtheit an passiven Transpondern 3, 3a, 3b (bzw. der Identifikationsmarke 1 als Ganzes) einen Verschleißzustand zu. Die Ermittlung nicht nur der Anzahl an tatsächlich aktivierten Transpondern 3, 3a, 3b, sondern auch deren Unterscheidung voneinander ist möglich, weil jeder Transponder 3, 3a, 3b ein eigenes Identifikationssignal aussendet, dass sich nicht nur von den Identifikationssignalen der Transponder 3, 3a, 3b anderer Identifikationsmarken 1 unterscheidet, sondern sich auch die Identifikationssignale der Transponder 3, 3a, 3b ein und derselben Identifikationsmarke 1 voneinander unterscheiden.

Zur Zuordnung des Verschleißzustandes kann die Auswerteeinheit 7 insbesondere die Gesamtheit an passiven Transpondern 3, 3a, 3b (bzw. die Identifikationsmarke 1 als Ganzes) als ordnungsgemäß einstufen und einen weiteren Betrieb des metallurgischen Gefäßes 2 zulassen, wenn die Anzahl an tatsächlich aktivierten passiven Transpondern 3, 3a, 3b oberhalb einer oberen Schranke liegt. Die obere Schranke muss nicht notwendigerweise eine ganze Zahl sein. Umgekehrt kann die Auswerteeinheit 7 die Gesamtheit an passiven Transpondern 3, 3a, 3b (bzw. die Identifikationsmarke 1 als Ganzes) als verschlissen einstufen, wenn die Anzahl an tatsächlich aktivierten passiven Transpondern 3, 3a, 3b unterhalb einer unteren Schranke liegt. Die untere Schranke muss - analog zur oberen Schranke - nicht notwendigerweise eine ganze Zahl sein.

Wenn die Auswerteeinheit 7 diese Einstufung - also die Einstufung als verschlissen - vornimmt, wird von der Auswerteeinheit 7 unmittelbar - d.h. ohne zeitliche Verzögerung - eine Anforderung für einen Austausch mindestens eines der passiven Transponder 3, 3a, 3b bzw. für einen Austausch der Identifikationsmarke 1 als Ganzes ausgegeben. Es ist möglich, dass die Ausgabe über eine Anzeigeeinheit 8 an eine Bedienperson (nicht dargestellt) erfolgt. Die Anzeigeeinheit 8 kann eine einfache Signallampe sein. Auch kann es sich beispielsweise um einen Computermonitor oder dergleichen handeln, über den eine entsprechende Nachricht ausgegeben wird. Es ist auch möglich, dass die Anzeigeeinheit 8 ein mobiles Endgerät ist wie beispielsweise ein Smartphone oder ein Tablet. Alternativ kann die Ausgabe der Anforderung durch Übermittlung an ein übergeordnetes Managementsystem 9 erfolgen, mit dem die Auswerteeinheit 7 datentechnisch verbunden ist. In diesem Fall wird die Anforderung dort weiter verarbeitet. Die datentechnische Verbindung der Auswerteeinheit 7 mit den Managementsystem 9 kann nach Bedarf kabelgebunden oder kabellos sein. Es ist sogar möglich, dass die Auswerteeinheit 7 mit dem Managementsystem 9 (oder einer anderen Einrichtung) über ein größeres Netzwerk kommuniziert, sogar über das Internet.

Die obere Schranke und die untere Schranke können nach Bedarf bestimmt sein. Wenn - beispielsweise - die Identifikationsmarken 1 der metallurgischen Gefäße 2 jeweils vier Transponder 3, 3a, 3b umfassen, kann beispielsweise die obere Schranke bei 3, 5 oder bei 2,5 liegen, die untere Schranke bei 2,5 oder bei 1,5. Selbstverständlich sind - je nach Anzahl an Transpondern 3, 3a, 3b pro Identifikationsmarke 1 - auch andere Zahlenwerte für die obere Schranke und die untere Schranke möglich und sinnvoll.

In der Regel ist die obere Schranke größer als die untere Schranke. Wenn die Anzahl an tatsächlich aktivierten passiven Transpondern 3, 3a, 3b zwischen der unteren Schranke und der oberen Schranke liegt, kann die Auswerteeinheit 7 daher ein Warnsignal über die Anzeigeeinheit 8 an die Bedienperson ausgeben. Wenn - rein beispielhaft - die obere Schranke bei 3, 5 liegt und die untere Schranke bei 1, 5, wäre dies bei zwei und bei drei tatsächlich aktivierten passiven Transponder an 3, 3a, 3b der Fall. Das Warnsignal ist ein anderes Signal als die Anforderung für einen Austausch mindestens eines der passiven Transponder 3, 3a, 3b. Alternativ oder zusätzlich zum Ausgeben über die Anzeigeeinheit 8 kann das Warnsignal von der Auswerteeinheit 7 an das übergeordnete Managementsystem 9 übermittelt werden.

Vorzugsweise wird innerhalb der Auswerteeinheit 7 zusammen mit der Ausgabe bzw. Übermittlung des Warnsignals ein Timer 13 gestartet. Der Timer 13 läuft nach einer vorbestimmten Verzögerungszeit T0 ab. Der Ablauf der Verzögerungszeit T0 bewirkt, dass der Timer 13 unmittelbar eine Anforderung für einen Austausch mindestens eines der passiven Transponder 3, 3a, 3b über die Anzeigeeinheit 8 an die Bedienperson ausgibt oder die Anforderung an das übergeordnete Managementsystem 9 übermittelt.

In dem Managementsystem 9 ist ein Einsatz- und Fahrplan für das metallurgische Gefäß 2 hinterlegt. Vorzugsweise nimmt die Auswerteeinheit 7 von den Managementsystem 9 den Einsatz- und Fahrplan für das metallurgische Gefäß 2 entgegen. Zumindest in dem Fall, dass die Auswerteeinheit 7 eine Anforderung für einen Austausch mindestens eines der passiven Transponder 3, 3a, 3b über die Anzeigeeinheit 8 ausgibt, kann die Auswerteeinheit 7 daher zugleich auch unter Verwendung des Einsatz- und Fahrplans einen bevorzugten Zeitpunkt oder Zeitraum für den Austausch mindestens eines der passiven Transponder 3, 3a, 3b ermitteln und zusammen mit der Anforderung über die Anzeigeeinheit 8 an die Bedienperson ausgeben.

Die FIG 3 und 4 zeigen eine erste Identifikationsmarke 1 mit einer Trägermatrix 11 und drei passiven Transpondern 3, die beabstandet nebeneinander auf einer Ebene 10 in die Trägermatrix 11 eingebettet angeordnet sind. Die Trägermatrix 11 umfasst eine erste Lage 11a und eine dünnere zweite Lage 11b, an deren Kontaktflächen sich die Ebene 10 befindet. Die Lage 11a ist im montierten Zustand der Identifikationsmarke 1 der Oberfläche 2a des metallurgischen Gefäßes 2 zugewandt, die Lage 11b von der Oberfläche 2a abgewandt.

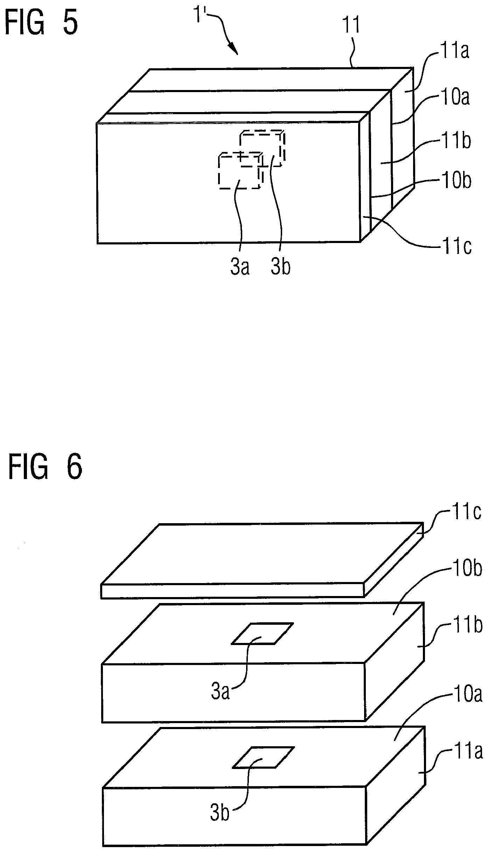

Die FIG 5 und 6 zeigen eine zweite Identifikationsmarke 1' mit einer Trägermatrix 11 und mit zwei passiven Transpondern 3a, 3b, die auf unterschiedlichen Ebenen 10a, 10b in der Trägermatrix 11 eingebettet angeordnet sind. Die Trägermatrix 11 umfasst eine erste Lage 11a, eine zweite Lage 11b und eine dritte Lage 11c. Die erste Ebene 10a und der Transponder 3b befinden sich zwischen der ersten Lage 11a und der zweiten Lage 11b, während die zweite Ebene 10b und der Transponder 3a sich zwischen der zweiten Lage 11b und der dritten Lage 11c befinden. Die Lage 11a ist im montierten Zustand der Identifikationsmarke 1 der Oberfläche 2a des metallurgischen Gefäßes 2 zugewandt, die Lage 11c von der Oberfläche 2a abgewandt. Eine Dicke der Lage 11a ist größer als eine Dicke der Lage 11c. Eine Dicke der Lage 11b ist mindestens so groß wie die Dicke der Lage 11c und höchstens so groß wie die Dicke der Lage 11a. In der Regel liegt sie zwischen diesen beiden Werten.

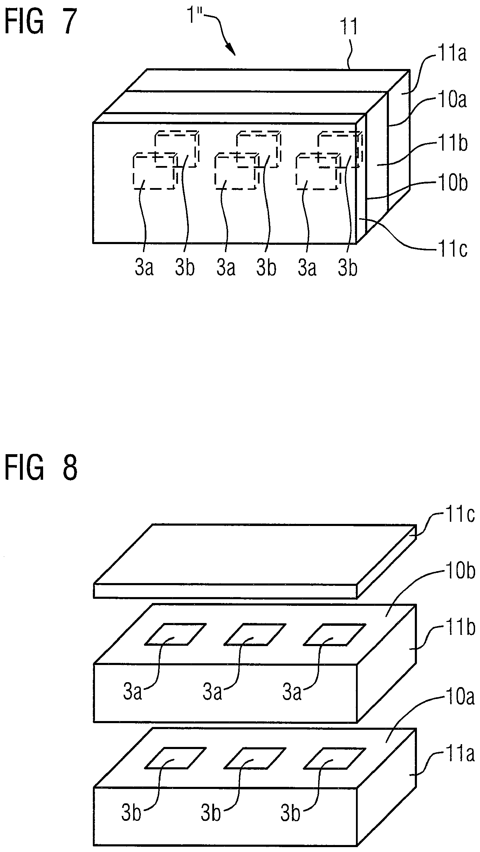

Die FIG 7 und 8 zeigen eine dritte Identifikationsmarke 1" mit einer Trägermatrix 11 und mit sechs passiven Transpondern 3a, 3b. Drei passive Transponder 3b sind beabstandet nebeneinander auf einer ersten Ebene 10a in die Trägermatrix 11 eingebettet angeordnet. Weiterhin sind drei passive Transponder 3a beabstandet nebeneinander auf einer zweiten Ebene 10b in die Trägermatrix 11 eingebettet angeordnet. Die Trägermatrix 11 umfasst eine erste Lage 11a, eine zweite Lage 11b und eine dünne dritte Lage 11c. Die erste Ebene 10a und die Transponder 3b befinden sich zwischen der ersten Lage 11a und der zweiten Lage 11b, während die zweite Ebene 10b und die Transponder 3a sich zwischen der zweiten Lage 11b und der dritten Lage 11c befinden. Für die Anordnung der Lagen 11a, 11b, 11c relativ zum metallurgischen Gefäß 2 und für die Dicken der Lagen 11a, 11b, 11c gelten die Ausführungen zu FIG 5 und 6 in analoger Weise.

Die Anordnung der Transponder 3, 3a, 3b, die Form der Trägermatrix 11, die Anzahl der Lagen 11, 11a, 11b der Trägermatrix 11 wie auch die Anordnung der Identifizierungsmarke 1 an einem metallurgischen Gefäß 2 usw. sind in den FIG lediglich beispielhaft gewählt und ohne weiteres veränderbar. Entscheidend ist, dass die Trägermatrix 11 aus einem elektrisch und thermisch isolierenden Material - beispielsweise Holz (massiv oder in Form von mit einem Bindemittel gebundenen Spänen oder dergleichen) oder Glasfaser oder einer Mischung oder einem Verbund derartiger Materialien - gebildet ist und in die Trägermatrix 11 mindestens zwei passive Transponder 3, 3a, 3b eingebettet sind.

Kurz zusammengefasst betrifft die vorliegende Erfindung somit folgenden Sachverhalt:
Ein metallurgisches Gefäß 2 weist eine äußere Oberfläche 2a und eine Identifikationsmarke 1, 1', 1" auf. Die Identifikationsmarke 1, 1', 1" ist an der äußeren Oberfläche 2a angeordnet. Sie weist eine Trägermatrix 11 auf, die aus einem elektrisch und thermisch isolierenden Material gebildet ist. In die Trägermatrix 11 sind mindestens zwei passive Transponder 3, 3a, 3b eingebettet. Innerhalb einer metallurgischen Anlage ist an einer Nachverfolgungsposition eine Lesestation 4 zur Wegverfolgung des metallurgischen Gefäßes 2 angeordnet. Eine Antenne 5 der Lesestation 4 initiiert eine Aktivierung der passiven Transponder 3, 3a, 3b, sofern das metallurgische Gefäß 2 sich in einem Erfassungsbereich der Lesestation 4 befindet. Daraufhin liest eine Leseeinheit 6 der Lesestation 4 die aktivierten passiven Transponder 3, 3a, 3b aus und übermittelt das Ergebnis an eine Auswerteeinheit 7 der Lesestation 4. Die Auswerteeinheit 7 ermittelt, welche und/oder wieviele der passiven Transponder 3, 3a, 3b tatsächlich aktiviert wurden. In Abhängigkeit von dieser Ermittlung ordnet die Auswerteeinheit 7 der Gesamtheit an passiven Transpondern 3, 3a, 3b des metallurgischen Gefäßes 2 einen Verschleißzustand zu.

Die vorliegende Erfindung weist viele Vorteile auf. Insbesondere kann auf einfache Weise ein zuverlässiger Betrieb der metallurgischen Anlage erreicht werden. Weiterhin ist die Erkennung der metallurgischen Gefäße 2 und die Ermittlung des Verschleißzustandes der Identifikationsmarken 1, 1', 1" einschließlich der darauf aufbauenden Maßnahmen ohne weiteres im Sinne des Gedankens "Industrie 4.0" oder "Internet of Things and Services" in eine Vernetzung einbindbar.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

### Bezugszeichenliste

- 1, 1', 1": Identifikationsmarken
- 2: metallurgisches Gefäß
- 2a: äußere Oberfläche
- 3, 3a, 3b: Transponder
- 4: Lesestation
- 5: Antenne
- 6: Leseeinheit
- 7: Auswerteeinheit
- 8: Anzeigeeinheit
- 9: Managementsystem
- 10, 10a, 10b: Ebenen
- 11: Trägermatrix
- 11a, 11b, 11c: Lagen
- 12: Sensoreinrichtung
- 13: Timer

- T0: Verzögerungszeit

## Patentansprüche

1. Metallurgisches Gefäß,
- wobei das metallurgische Gefäß eine äußere Oberfläche (2a) und eine Identifikationsmarke (1, 1', 1") aufweist,
- wobei die Identifikationsmarke (1, 1', 1") eine Trägermatrix (11) aufweist,
- wobei die Identifikationsmarke (1, 1', 1") an der äußeren Oberfläche (2a) angeordnet ist,
- wobei die Trägermatrix (11) aus einem elektrisch und thermisch isolierenden Material gebildet ist,
**dadurch gekennzeichnet, dass**
in die Trägermatrix (11) mindestens zwei passive Transponder (3, 3a, 3b) eingebettet sind,
- wobei die Trägermatrix (11) mehrere Lagen (11a, 11b, 11c) aufweist,
- wobei die Dicke der Lagen (11a, 11b, 11c) mit zunehmendem Abstand von der äußeren Oberfläche (2a) des metallurgischen Gefäßes (2) abnimmt und dass zwischen je zwei Lagen (11a, 11b, 11c) jeweils mindestens einer der passiven Transponder (3, 3a, 3b) angeordnet ist.

2. Betriebsverfahren für eine innerhalb einer metallurgischen Anlage an einer Nachverfolgungsposition angeordnete Lesestation (4) zur Wegverfolgung eines metallurgischen Gefäßes (2) gemäß Anspruch 1, an dem mindestens zwei passive Transponder (3, 3a, 3b) angeordnet sind,
- wobei eine Antenne (5) der Lesestation (4) eine Aktivierung der passiven Transponder (3, 3a, 3b) initiiert, sofern ein derartiges metallurgisches Gefäß (2) sich in einem Erfassungsbereich der Lesestation (4) befindet,
- wobei daraufhin eine Leseeinheit (6) der Lesestation (4) die aktivierten passiven Transponder (3, 3a, 3b) ausliest und das Ergebnis an eine Auswerteeinheit (7) der Lesestation (4) übermittelt,
- wobei die Auswerteeinheit (7) ermittelt, welche und/oder wieviele der passiven Transponder (3, 3a, 3b) tatsächlich aktiviert wurden,
- wobei die Auswerteeinheit (7) in Abhängigkeit von dieser Ermittlung der Gesamtheit an passiven Transpondern (3, 3a, 3b) des metallurgischen Gefäßes (2) einen Verschleißzustand zuordnet.

3. Betriebsverfahren nach Anspruch 2,
**dadurch gekennzeichnet,**
**dass** die Auswerteeinheit (7) von einem Bediener oder von einem übergeordneten Managementsystem (9) eine Information über die Anwesenheit des metallurgischen Gefäßes (2) in dem Erfassungsbereich der Lesestation (4) entgegennimmt oder dass die Lesestation (4) die Anwesenheit des metallurgischen Gefäßes (2) in dem Erfassungsbereich der Lesestation (4) mittels einer Sensoreinrichtung (12) erfasst.

4. Betriebsverfahren nach Anspruch 2 oder 3,
**dadurch gekennzeichnet,**
**dass** die Auswerteeinheit (7)
- in dem Fall, dass die Anzahl an tatsächlich aktivierten passiven Transpondern (3, 3a, 3b) oberhalb einer oberen Schranke liegt, die Gesamtheit an passiven Transpondern (3, 3a, 3b) als ordnungsgemäß einstuft und einen weiteren Betrieb des metallurgischen Gefäßes (2) zulässt und
- in dem Fall, dass die Anzahl an tatsächlich aktivierten passiven Transpondern (3, 3a, 3b) unterhalb einer unteren Schranke liegt, unmittelbar eine Anforderung für einen Austausch mindestens eines der passiven Transponder (3, 3a, 3b) über eine Anzeigeeinheit (8) an eine Bedienperson ausgibt und/oder die Anforderung an ein übergeordnetes Managementsystem (9) übermittelt.

5. Betriebsverfahren nach Anspruch 4,
**dadurch gekennzeichnet,**
**dass** die obere Schranke größer als die untere Schranke ist und dass die Auswerteeinheit (7) in dem Fall, dass die Anzahl an tatsächlich aktivierten passiven Transpondern (3, 3a, 3b) zwischen der unteren Schranke und der oberen Schranke liegt, ein Warnsignal über die Anzeigeeinheit (8) an die Bedienperson ausgibt und/oder das Warnsignal an das übergeordnete Managementsystem (9) übermittelt und dass das Warnsignal ein von einer Anforderung für einen Austausch mindestens eines der passiven Transponder (3, 3a, 3b) verschiedenes Signal ist.

6. Betriebsverfahren nach Anspruch 5,
**dadurch gekennzeichnet,**
**dass** innerhalb der Auswerteeinheit (7) zusammen mit der Ausgabe bzw. Übermittlung des Warnsignals ein Timer (13) gestartet wird und dass der Timer (13) nach Ablauf einer vorbestimmten Verzögerungszeit (T0) unmittelbar eine Anforderung für einen Austausch mindestens eines der passiven Transponder (3, 3a, 3b) über die Anzeigeeinheit (8) an die Bedienperson ausgibt und/oder an das übergeordnete Managementsystem (9) übermittelt.

7. Betriebsverfahren nach Anspruch 4, 5 oder 6,
**dadurch gekennzeichnet,**
**dass** die Auswerteeinheit (7) von dem Managementsystem (9) einen Einsatz- und Fahrplan für das metallurgische Gefäß (2) entgegennimmt und dass die Auswerteeinheit (7) in dem Fall, dass sie eine Anforderung für einen Austausch mindestens eines der passiven Transponder (3, 3a, 3b) über die Anzeigeeinheit (8) an die Bedienperson ausgibt, unter Verwendung des Einsatz- und Fahrplans einen bevorzugten Zeitpunkt oder Zeitraum für den Austausch mindestens eines der passiven Transponder (3, 3a, 3b) ermittelt und zusammen mit der Anforderung über die Anzeigeeinheit (8) an die Bedienperson ausgibt.

8. Innerhalb einer metallurgischen Anlage an einer Nachverfolgungsposition angeordnete Lesestation,
- wobei die Lesestation eine Antenne (5) zur Initiierung der Aktivierung von an einem metallurgischen Gefäß (2)gemäß Anspruch 1 angeordneten passiven Transpondern (3, 3a, 3b) aufweist,
- wobei die Lesestation eine Leseeinheit (6) zum Auslesen der aktivierten passiven Transponder (3, 3a, 3b) des metallurgischen Gefäßes (2) und zum Übermitteln der ausgelesenen Daten an eine Auswerteeinheit (7) der Lesestation aufweist,
- wobei die Lesestation die Auswerteeinheit (7) aufweist,
- wobei die Auswerteeinheit (7) derart ausgebildet ist, dass sie ermittelt, welche und/oder wie viele der passiven Transponder (3, 3a, 3b) tatsächlich aktiviert wurden, und in Abhängigkeit von dieser Ermittlung der Gesamtheit an passiven Transpondern (3, 3a, 3b) des metallurgischen Gefäßes (2) einen Verschleißzustand zuordnet.

9. Lesestation nach Anspruch 8,
**dadurch gekennzeichnet,**
**dass** die Auswerteeinheit (7) derart ausgebildet ist, dass sie ein Betriebsverfahren nach einem der Ansprüche 2 bis 7 ausführt.

## Claims

1. Metallurgical vessel,
- wherein the metallurgical vessel has an outer surface (2a) and an identification tag (1, 1', 1"),
- wherein the identification tag (1, 1', 1") has a carrier matrix (11),
- wherein the identification tag (1, 1', 1") is arranged on the outer surface (2a),
- wherein the carrier matrix (11) is formed from a material which is electrically and thermally insulating,
**characterised in that** there are at least two passive transponders (3, 3a, 3b) embedded in the carrier matrix (11),
- wherein the carrier matrix (11) has several layers (11a, 11b, 11c),
- wherein the thickness of the layers (11a, 11b, 11c) decreases with increasing distance from the outer surface (2a) of the metallurgical vessel (2) and arranged between each two layers (11a, 11b, 11c) there is in each case at least one of the passive transponders (3, 3a, 3b).

2. Operating method for a reading station (4) arranged at a tracking position within the metallurgical plant, for tracking the path of a metallurgical vessel (2) according to claim 1, on which are arranged at least two passive transponders (3, 3a, 3b),
- wherein an antenna (5) of the reading station (4) initiates an activation of the passive transponders (3, 3a, 3b) if a metallurgical vessel (2) of this type is located within a sensing range of the reading station (4),
- wherein a reading unit (6) of the reading station (4) thereupon reads out the passive transponders (3, 3a, 3b) which have been activated and communicates the result to an evaluating unit (7) of the reading station (4),
- wherein the evaluating unit (7) determines which and/or how many of the passive transponders (3, 3a, 3b) have actually been activated,
- wherein, depending on this determination, the evaluating unit (7) assigns to the totality of the passive transponders (3, 3a, 3b) of the metallurgical vessel (2) a wear state.

3. Operating method according to claim 2,
**characterised in that**
the evaluating unit (7) accepts from an operator or from a higher level management system (9) data about the presence of the metallurgical vessel (2) in the sensing range of the reading station (4), or that the reading station (4) senses, by means of a sensing facility (12), the presence of the metallurgical vessel (2) in the sensing range of the reading station (4).

4. Operating method according to claim 2 or 3,
**characterised in that**
the evaluating unit (7)
- in the case that the number of passive transponders (3, 3a, 3b) which are actually activated lies above an upper limit, classifies the totality of the passive transponders (3, 3a, 3b) as being in order and permits continued operation of the metallurgical vessel (2),
- in the case that the number of passive transponders (3, 3a, 3b) which are actually activated lies below a lower limit, immediately outputs to an operating individual via a display unit (8) a request for the replacement of at least one of the passive transponders (3, 3a, 3b) and/or communicates the request to a higher level management system (9).

5. Operating method according to claim 4,
**characterised in that**
the upper limit is greater than the lower limit and that, in the case that the number of passive transponders (3, 3a, 3b) which have actually been activated lies between the lower limit and the upper limit, the evaluating unit (7) outputs to the operating individual via the display unit (8) a warning signal, and/or communicates the warning signal to the higher level management system (9), and that the warning signal is a different signal from a request for the replacement of at least one of the passive transponders (3, 3a, 3b).

6. Operating method according to claim 5,
**characterised in that**
within the evaluating unit (7) a timer (13) is started together with the output or communication, as applicable, of the warning signal, and that after a predetermined delay time (T0) has expired the timer (13) immediately outputs via the display unit (8) to the operating individual, and/or communicates to the higher level management system (9), a request for the replacement of at least one of the passive transponders (3, 3a, 3b).

7. Operating method according to claim 4, 5 or 6,
**characterised in that**
the evaluating unit (7) accepts from the management system (9) a usage and movement plan for the metallurgical vessel (2) and that, using the usage and movement plan, the evaluating unit (7), in the case that it outputs to the operating individual via the display unit (8) a request for the replacement of at least one of the passive transponders (3, 3a, 3b), determines and via the display unit (8) outputs to the operating individual together with the request a preferred time point or time period for the replacement of at least one of the passive transponders (3, 3a, 3b).

8. Reading station arranged within a metallurgical plant at a tracking position,
- wherein the reading station has an antenna (5) for the purpose of initiating the activation of passive transponders (3, 3a, 3b) arranged on a metallurgical vessel (2) according to claim 1,
- wherein the reading station has a reading unit (6) for the purpose of reading out those passive transponders (3, 3a, 3b) of the metallurgical vessel (2) which have been activated, and for the purpose of communicating the data read out to an evaluating unit (7) of the reading station,
- wherein the reading station has the evaluating unit (7),
- wherein the evaluating unit (7) is constructed in such a way that it determines which and/or how many of the passive transponders (3, 3a, 3b) have actually been activated, and depending on this determination assigns to the totality of the passive transponders (3, 3a, 3b) of the metallurgical vessel (2) a wear state.

9. Reading station according to claim 8,
**characterised in that**
the evaluating unit (7) is constructed in such a way that it carries out an operating method in accordance with one of claims 2 to 7.

## Revendications

1. Récipient métallurgique,
- dans lequel le récipient métallurgique présente une surface extérieure (2a) et une marque d'identification (1, 1', 1''),
- dans lequel la marque d'identification (1, 1', 1'') présente une matrice porteuse (11),
- dans lequel la marque d'identification (1, 1', 1'') est disposée sur la surface extérieure (2a),
- dans lequel la matrice porteuse (11) est formée d'un matériau isolant électrique et thermique,
**caractérisé en ce**
**qu'**au moins deux transpondeurs passifs (3, 3a, 3b) sont enchâssés dans la matrice porteuse (11),
- dans lequel la matrice porteuse (11) présente plusieurs couches (11a, 11b, 11c),
- dans lequel l'épaisseur des couches (11a, 11b, 11c) décroît à mesure que l'écart de la surface extérieure (2a) du récipient métallurgique (2) augmente et que respectivement au moins un des transpondeurs passifs (3, 3a, 3b) est disposé entre deux couches (11a, 11b, 11c) respectives.

2. Procédé d'exploitation pour un poste de lecture (4) disposé en position de suivi à l'intérieur d'une installation métallurgique pour suivre le départ d'un récipient métallurgique (2) selon la revendication 1, sur lequel au moins deux transpondeurs passifs (3, 3a, 3b) sont disposés,
- dans lequel une antenne (5) du poste de lecture (4) lance une activation des transpondeurs passifs (3, 3a, 3b), dans la mesure où un tel récipient métallurgique (2) se trouve dans une zone de détection du poste de lecture (4),
- dans lequel à la suite de quoi, une unité de lecture (6) du poste de lecture (4) lit les transpondeurs passifs (3, 3a, 3b) activés et le résultat est transmis à une unité d'évaluation (7) du poste de lecture (4),
- dans lequel l'unité d'évaluation (7) détermine quels et/ou combien de transpondeurs passifs (3, 3a, 3b) ont été effectivement activés,
- dans lequel l'unité d'évaluation (7) attribue un état d'usure en fonction de cette détermination de la totalité de transpondeurs passifs (3, 3a, 3b) du récipient métallurgique (2) .

3. Procédé d'exploitation selon la revendication 2,
**caractérisé en ce que**
l'unité d'évaluation (7) reçoit d'un utilisateur ou d'un système de gestion (9) maître, une information sur la présence du récipient métallurgique (2) dans la zone de détection du poste de lecture (4) ou bien que le poste de lecture (4) détecte la présence du récipient métallurgique (2) dans la zone de détection du poste de lecture (4) au moyen d'un dispositif de capteurs (12).

4. Procédé d'exploitation selon la revendication 2 ou 3,
**caractérisé en ce que**
l'unité d'évaluation (7)
- au cas où le nombre de transpondeurs passifs (3, 3a, 3b) effectivement activés est supérieur à une limite supérieure, classe la totalité de transpondeurs passifs (3, 3a, 3b) comme corrects et autorise la poursuite d'exploitation du récipient métallurgique (2) et
- au cas où le nombre de transpondeurs passifs (3, 3a, 3b) effectivement activés est inférieur à une limite inférieure, envoie directement une demande d'un échange d'au moins un des transpondeurs passifs (3, 3a, 3b) à un opérateur par le biais d'une unité d'affichage (8) et/ou transmet la demande à un système de gestion (9) maître.

5. Procédé d'exploitation selon la revendication 4,
**caractérisé en ce que**
la limite supérieure est plus grande que la limite inférieure et que l'unité d'évaluation (7), au cas où le nombre de transpondeurs passifs (3, 3a, 3b) effectivement activés est situé entre la limite inférieure et la limite supérieure, envoie un signal d'avertissement à l'opérateur par le biais de l'unité d'affichage (8) et/ou transmet le signal d'avertissement au système de gestion (9) maître et que le signal d'avertissement est un signal différent d'une demande d'un échange d'au moins un des transpondeurs passifs (3, 3a, 3b) .

6. Procédé d'exploitation selon la revendication 5,
**caractérisé en ce qu'**une horloge (13) est démarrée à l'intérieur de l'unité d'évaluation (7) conjointement avec l'envoi, respectivement, la transmission du signal d'avertissement et que l'horloge (13), après écoulement d'une temporisation (T0) prédéfinie, envoie directement une demande d'un échange d'au moins un des transpondeurs passifs (3, 3a, 3b) à l'opérateur par le biais de l'unité d'affichage (8) et/ou transmet la demande au système de gestion (9) maître.

7. Procédé d'exploitation selon la revendication 4, 5 ou 6 ;
**caractérisé en ce que**
l'unité d'évaluation (7) reçoit du système de gestion (9) un planning et un horaire pour le récipient métallurgique (2) et que l'unité d'évaluation (7), au cas où elle envoie une demande d'un échange d'au moins un des transpondeurs passifs (3, 3a, 3b) à l'opérateur par le biais de l'unité d'affichage (8), détermine et transmet à l'opérateur conjointement avec la demande, par le biais de l'unité d'affichage (8), en employant le planning et l'horaire, un moment ou une durée préféré(e) pour l'échange d'au moins un des transpondeurs passifs (3, 3a, 3b) .

8. Poste de lecture disposé en position de suivi à l'intérieur d'une installation métallurgique,
- dans lequel le poste de lecture présente une antenne (5) pour lancer l'activation de transpondeurs passifs (3, 3a, 3b) disposés sur un récipient métallurgique (2) selon la revendication 1,
- dans lequel le poste de lecture, présente une unité de lecture (6) pour lire les transpondeurs passifs (3, 3a, 3b) activés du récipient métallurgique (2) et pour transmettre les données lues à une unité d'évaluation (7) du poste de lecture,
- dans lequel le poste de lecture présente l'unité d'évaluation (7),
- dans lequel l'unité d'évaluation (7) est ainsi conçue qu'elle détermine quels et/ou combien de transpondeurs passifs (3, 3a, 3b) ont été effectivement activés, et attribue un état d'usure en fonction de cette détermination de la totalité de transpondeurs passifs (3, 3a, 3b) du récipient métallurgique (2) .

9. Poste de lecture selon la revendication 8,
**caractérisé en ce que**
l'unité d'évaluation (7) est ainsi conçue qu'elle exécute un procédé d'exploitation selon l'une des revendications 2 à 7.
